# EUROPEAN PATENT APPLICATION

(11) **EP 4 507 243 A1**
(43) Date of publication of application: **12.02.2025**
(21) Application number: 24766461.8
(22) Date of filing: 06.03.2024
(51) Int. Cl.: H04L 5/00

(54) **METHOD USED FOR NODE FOR WIRELESS COMMUNICATION AND APPARATUS**

(30) Priority: 09.03.2023 CN 202310228861
(71) Applicant: SHANGHAI LANGBO COMMUNICATION TECHNOLOGY COMPANY LIMITED, Shanghai 200240 (CN)
(72) Inventor: HU, Yang, Shanghai 201206 (CN); ZHANG, Xiaobo, Shanghai 201206 (CN)
(74) Representative: Zhang, Fan
(86) International application number: PCT/CN2024/080248
(87) International publication number: WO 2024/183746

(57) **Abstract**

Disclosed in the present application are a method used for a node for wireless communication and an apparatus. A first receiver receives a plurality of signalings; and a first transmitter transmits a plurality of PUSCHs, wherein the plurality of PUSCHs are on a same serving cell, the plurality of PUSCHs respectively depend on the plurality of signalings, and the plurality of PUSCHs comprise PUSCHs associated with different coresetPool Index values. A first PUCCH overlaps all of the plurality of PUSCHs, and a first UCI is associated with the first PUCCH. The multiplexing relationship between the first UCI and the plurality of PUSCHs is related to the distribution of the plurality of PUSCHs.

## Description

### TECHNICAL FIELD

The present application relates to transmission methods and devices in wireless communication systems, and in particular to a transmission method and device of a radio signal in a wireless communication system supporting cellular networks.

### BACKGROUND

UCI multiplexing is an important aspect in uplink transmission.

### SUMMARY

In the case where a PUCCH overlaps with multiple PUSCHs and there exists PUSCHs associated with different coresetPoolIndex values in the multiple PUSCHs, the multiplexing relation between UCI and the multiple PUSCHs is an important issue that needs to be considered. The present application discloses a solution to the above problem. The present application can be applied to various wireless communication scenarios, such as single TRP (Transmit/Receive point) transmission, multi-TRP transmission, single panel transmission, multi-panel transmission, etc., where similar technical effects can be achieved. In addition, adopting a unified solution for different scenarios (including but not limited to single TRP transmission, multi-TRP transmission, single panel transmission, and multi-panel transmission) can also help reduce hardware complexity and cost, or improve performance. If no conflict is incurred, embodiments in any node in the present application and characteristics of the embodiments are also applicable to any other node, and vice versa. And the embodiments in the present application and the characteristics in the embodiments can be arbitrarily combined if there is no conflict.

In one embodiment, interpretations of the terminology in the present application refer to definitions given in the 3GPP TS36 series.

In one embodiment, interpretations of the terminology in the present application refer to definitions given in the 3GPP TS38 series.

In one embodiment, interpretations of the terminology in the present application refer to definitions given in the 3GPP TS37 series.

In one embodiment, interpretations of the terminology in the present application refer to definitions given in Institute of Electrical and Electronics Engineers (IEEE) protocol specifications.

The present application provides a method in a first node for wireless communications, comprising:
receiving multiple signalings; and
transmitting multiple PUSCHs, the multiple PUSCHs being on a same serving cell, the multiple PUSCHs respectively depending on the multiple signalings, there existing PUSCHs associated with different coresetPoolIndex values among the multiple PUSCHs;
herein, a first PUCCH overlaps with the multiple PUSCHs, and a first UCI is associated with the first PUCCH; a multiplexing relation between the first UCI and the multiple PUSCHs is related to a distribution of the multiple PUSCHs.

In one embodiment, advantages of the above method include: having good flexibility.

In one embodiment, advantages of the above method include: being beneficial for improving the uplink transmission performance.

In one embodiment, advantages of the above method include: facilitating the simultaneous transmission of multiple panels.

In one embodiment, advantages of the above method include: providing a simple and effective solution for UCI multiplexing related problems in the case where a PUCCH overlaps with multiple PUSCHs and there exist PUSCHs associated with different coresetPoolIndex values in the multiple PUSCHs.

In one embodiment, advantages of the above method include: avoiding the degradation of communication performance incurred by unclear definition of transmission behavior.

In one embodiment, advantages of the above method include: changes to the existing 3GPP standard are minimal, and the workload required for standardization is minimal.

According to one aspect of the present application, the above method is characterized in that

the multiplexing relation between the first UCI and the multiple PUSCHs is related to whether there exists an earliest PUSCH in the multiple PUSCHs; when there exists an earliest PUSCH in the multiple PUSCHs, the first UCI is multiplexed on the earliest PUSCH in the multiple PUSCHs.

In one embodiment, advantages of the above method include: being beneficial for improving the transmission performance of UCI.

In one embodiment, advantages of the above method include: being beneficial for reducing the transmission delay of UCI.

According to one aspect of the present application, the above method is characterized in that
when there does not exist an earliest PUSCH in the multiple PUSCHs, the first UCI is not multiplexed onto any of the multiple PUSCHs.

In one embodiment, advantages of the above method include: providing a simple and effective processing scheme for the situation where a PUCCH overlaps with multiple PUSCHs and there exist PUSCHs associated with different coresetPoolIndex values in the multiple PUSCHs.

In one embodiment, advantages of the above method include: standardization effort is small.

According to one aspect of the present application, the above method is characterized in that
when there does not exist an earliest PUSCH in the multiple PUSCHs, the first UCI is multiplexed onto each PUSCH among the multiple PUSCHs.

In one embodiment, advantages of the above method include: being beneficial for improving the transmission performance of UCI.

According to one aspect of the present application, the above method is characterized in that
when there does not exist an earliest PUSCH in the multiple PUSCHs, the first UCI is multiplexed on a PUSCH associated with a target coresetPoolIndex value in the multiple PUSCHs, and the target coresetPoolIndex value is default.

In one embodiment, advantages of the above method include: providing a simple and effective UCI multiplexing scheme.

In one embodiment, advantages of the above method include: standardization effort is small.

According to one aspect of the present application, the above method is characterized in that
when there does not exist an earliest PUSCH in the multiple PUSCHs, the first UCI is multiplexed on a PUSCH associated with a target coresetPoolIndex value in the multiple PUSCHs, and the target coresetPoolIndex value is configurable.

In one embodiment, advantages of the above method include: being simple and effective as well as having good flexibility, which is conducive to the optimization of the transmission performance.

According to one aspect of the present application, the above method is characterized in that
when there does not exist an earliest PUSCH in the multiple PUSCHs, the first UCI is multiplexed on a PUSCH associated with a target coresetPoolIndex value in the multiple PUSCHs, and the first PUCCH is associated with a target coresetPoolIndex value.

In one embodiment, advantages of the above method include: having good flexibility, which is beneficial for optimizing the transmission performance.

According to one aspect of the present application, the above method is characterized in that
the first UCI is multiplexed onto an earliest PUSCH associated with a target coresetPoolIndex value in the multiple PUSCHs, and the target coresetPoolIndex value is default.

In one embodiment, advantages of the above method include: providing a simple and effective UCI multiplexing scheme.

In one embodiment, advantages of the above method include: the standardization effort is small.

According to one aspect of the present application, the above method is characterized in that
the first UCI is multiplexed onto an earliest PUSCH associated with a target coresetPoolIndex value in the multiple PUSCHs, and the target coresetPoolIndex value is configurable.

In one embodiment, advantages of the above method include: being simple and effective as well as having good flexibility, which is conducive to the optimization of transmission performance.

According to one aspect of the present application, the above method is characterized in that
the first UCI is multiplexed onto an earliest PUSCH associated with a target coresetPoolIndex value in the multiple PUSCHs, and the first PUCCH is associated with the target coresetPoolIndex value.

In one embodiment, advantages of the above method include: having good flexibility, which is beneficial for optimizing the transmission performance.

The present application provides a method in a second node for wireless communications, comprising:
transmitting multiple signalings; and
receiving multiple PUSCHs, the multiple PUSCHs being on a same serving cell, the multiple PUSCHs respectively depending on the multiple signalings, there existing PUSCHs associated with different coresetPoolIndex values among the multiple PUSCHs;
herein, a first PUCCH overlaps with the multiple PUSCHs, and a first UCI is associated with the first PUCCH; a multiplexing relation between the first UCI and the multiple PUSCHs is related to a distribution of the multiple PUSCHs.

According to one aspect of the present application, the above method is characterized in that
the multiplexing relation between the first UCI and the multiple PUSCHs is related to whether there exists an earliest PUSCH in the multiple PUSCHs; when there exists an earliest PUSCH in the multiple PUSCHs, the first UCI is multiplexed on the earliest PUSCH in the multiple PUSCHs.

According to one aspect of the present application, the above method is characterized in that
when there does not exist an earliest PUSCH in the multiple PUSCHs, the first UCI is not multiplexed onto any of the multiple PUSCHs.

According to one aspect of the present application, the above method is characterized in that
when there does not exist an earliest PUSCH in the multiple PUSCHs, the first UCI is multiplexed onto each PUSCH among the multiple PUSCHs.

According to one aspect of the present application, the above method is characterized in that
when there does not exist an earliest PUSCH in the multiple PUSCHs, the first UCI is multiplexed on a PUSCH associated with a target coresetPoolIndex value in the multiple PUSCHs, and the target coresetPoolIndex value is default.

According to one aspect of the present application, the above method is characterized in that
when there does not exist an earliest PUSCH in the multiple PUSCHs, the first UCI is multiplexed on a PUSCH associated with a target coresetPoolIndex value in the multiple PUSCHs, and the target coresetPoolIndex value is configurable.

According to one aspect of the present application, the above method is characterized in that
when there does not exist an earliest PUSCH in the multiple PUSCHs, the first UCI is multiplexed on a PUSCH associated with a target coresetPoolIndex value in the multiple PUSCHs, and the first PUCCH is associated with a target coresetPoolIndex value.

According to one aspect of the present application, the above method is characterized in that
the first UCI is multiplexed onto an earliest PUSCH associated with a target coresetPoolIndex value in the multiple PUSCHs, and the target coresetPoolIndex value is default.

According to one aspect of the present application, the above method is characterized in that
the first UCI is multiplexed onto an earliest PUSCH associated with a target coresetPoolIndex value in the multiple PUSCHs, and the target coresetPoolIndex value is configurable.

According to one aspect of the present application, the above method is characterized in that
the first UCI is multiplexed onto an earliest PUSCH associated with a target coresetPoolIndex value in the multiple PUSCHs, and the first PUCCH is associated with the target coresetPoolIndex value.

The present application provides a first node for wireless communications, comprising:
a first receiver, receiving multiple signalings; and
a first transmitter, transmitting multiple PUSCHs, the multiple PUSCHs being on a same serving cell, the multiple PUSCHs respectively depending on the multiple signalings, there existing PUSCHs associated with different coresetPoolIndex values among the multiple PUSCHs;
herein, a first PUCCH overlaps with the multiple PUSCHs, and a first UCI is associated with the first PUCCH; a multiplexing relation between the first UCI and the multiple PUSCHs is related to a distribution of the multiple PUSCHs.

The present application provides a second node for wireless communications, comprising:
a second transmitter, transmitting multiple signalings; and
a second receiver, receiving multiple PUSCHs, the multiple PUSCHs being on a same serving cell, the multiple PUSCHs respectively depending on the multiple signalings, there existing PUSCHs associated with different coresetPoolIndex values among the multiple PUSCHs;
herein, a first PUCCH overlaps with the multiple PUSCHs, and a first UCI is associated with the first PUCCH; a multiplexing relation between the first UCI and the multiple PUSCHs is related to a distribution of the multiple PUSCHs.

### BRIEF DESCRIPTION OF THE DRAWINGS

Other features, objects and advantages of the present application will become more apparent from the detailed description of non-restrictive embodiments taken in conjunction with the following drawings:
FIG. 1 illustrates a flowchart of the processing of a first node according to one embodiment of the present application;
FIG. 2 illustrates a schematic diagram of a network architecture according to one embodiment of the present application;
FIG. 3 illustrates a schematic diagram of a radio protocol architecture of a user plane and a control plane according to one embodiment of the present application;
FIG. 4 illustrates a schematic diagram of a first communication device and a second communication device according to one embodiment of the present application;
FIG. 5 illustrates a flowchart of signal transmission according to one embodiment of the present application;
FIG. 6 illustrates a schematic diagram of a multiplexing relation between a first UCI and multiple PUSCHs according to one embodiment of the present application;
FIG. 7 illustrates a schematic diagram of a multiplexing relation between a first UCI and multiple PUSCHs according to one embodiment of the present application;
FIG. 8 illustrates a schematic diagram of a multiplexing relation between a first UCI and multiple PUSCHs according to one embodiment of the present application;
FIG. 9 illustrates a schematic diagram of a relation between a first PUCCH and a target coresetPoolIndex value according to one embodiment of the present application;
FIG. 10 illustrates a structure block diagram of a processor in a first node according to one embodiment of the present application;
FIG. 11 illustrates a structure block diagram of a processor in second node according to one embodiment of the present application.

### DESCRIPTION OF THE EMBODIMENTS

The technical solution of the present application will be further described in detail below in combination with the drawings. It should be noted that, in the case of no conflict, the embodiments of the present application and the features in the embodiments may be combined with each other arbitrarily.

### Embodiment 1

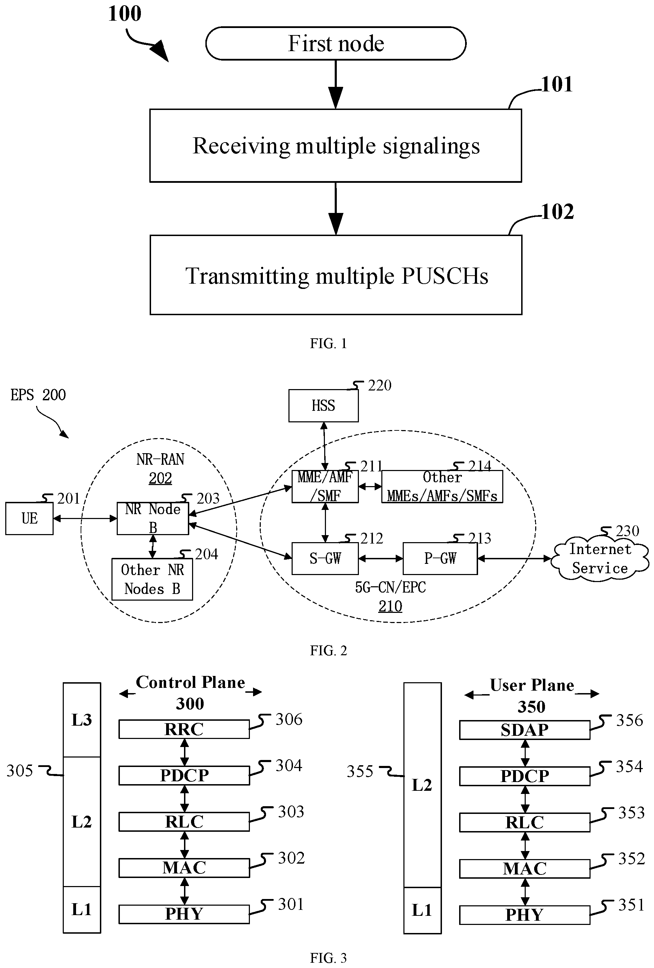

Embodiment 1 illustrates a flowchart of the processing of a first node according to one embodiment of the present application, as shown in FIG. 1.

In Embodiment 1, the first node in the present application receives multiple signalings in step 101; transmits multiple PUSCHs in step 102.

In embodiment 1, the multiple PUSCHs are on a same serving cell, the multiple PUSCHs respectively depend on the multiple signalings, there exist PUSCHs associated with different coresetPoolIndex values among the multiple PUSCHs; a first PUCCH overlaps with the multiple PUSCHs, and a first UCI is associated with the first PUCCH; a multiplexing relation between the first UCI and the multiple PUSCHs is related to a distribution of the multiple PUSCHs.

In one embodiment, the multiple signalings are multiple Downlink control information (DCI).

In one embodiment, the multiple signalings are multiple DCI formats.

In one embodiment, each of the multiple signalings is a DCI.

In one embodiment, each of the multiple signalings is a DCI format.

In one embodiment, one of the multiple signalings is an RRC signaling.

In one embodiment, one of the multiple signalings is a physical-layer signaling.

In one embodiment, one of the multiple signalings is a DCI.

In one embodiment, one of the multiple signalings is a DCI format.

In one embodiment, one of the multiple signalings is a layer 1 (L1) signaling.

In one embodiment, one of the multiple signalings comprises at least one field in an Information Element (IE).

In one embodiment, the meaning of transmitting the multiple Physical uplink shared channels (PUSCHs) is: transmitting at least one of a Transport Block (TB) or Channel State Information (CSI) report on each of the multiple PUSCHs.

In one embodiment, the meaning of transmitting the multiple PUSCHs is: transmitting a signal on each of the multiple PUSCHs.

In one embodiment, the meaning of transmitting the multiple PUSCHs is: transmitting a TB on each of the multiple PUSCHs.

In one embodiment, the meaning of transmitting the multiple PUSCHs comprises: transmitting at least one of a TB or CSI report on each of the multiple PUSCHs.

In one embodiment, the meaning of transmitting the multiple PUSCHs comprises: transmitting a signal comprising an output obtained after a bit block through at least channel coding, scrambling, modulating, layer mapping, pre-coding, mapping to virtual resource blocks, and mapping from virtual resource blocks to physical resource blocks on each of the multiple PUSCHs.

In one embodiment, the meaning of transmitting the multiple PUSCHs comprises: each of the multiple PUSCHs is used to bear transmitted uplink information.

In one embodiment, one of the multiple signalings is used to configure one of the multiple PUSCHs.

In one embodiment, the multiple PUSCHs are more than one PUSCH.

In one embodiment, the multiple PUSCHs only comprise 2 PUSCHs.

In one embodiment, the multiple PUSCHs comprise more than 2 PUSCHs.

In one embodiment, the multiple PUSCHs only comprise 3 PUSCHs.

In one embodiment, the multiple PUSCHs comprise more than 3 PUSCHs.

In one embodiment, the meaning of the expression that "the multiple PUSCHs respectively depend on the multiple signalings" is: the multiple signalings are respectively used to schedule the multiple PUSCHs.

In one embodiment, the meaning of the expression that "the multiple PUSCHs respectively depend on the multiple signalings" is: any of the multiple PUSCHs is scheduled by one of the multiple signalings.

In one embodiment, the meaning of the expression that "the multiple PUSCHs respectively depend on the multiple signalings" is: any of the multiple PUSCHs is scheduled or activated by one of the multiple signalings.

In one embodiment, when a signaling is used to schedule a PUSCH, the PUSCH depends on the signaling.

In one embodiment, when a signaling is used to activate a PUSCH, the PUSCH depends on the signaling.

In one embodiment, when a signaling is used to configure resources occupied by a PUSCH, the PUSCH depends on the signaling.

In one embodiment, the meaning of the expression that "there exist PUSCHs being associated with different coresetPoolIndex values among the multiple PUSCHs" is: there exists at least one PUSCH being associated with a coresetPoolIndex value among the multiple PUSCHs and there exists at least one PUSCH being associated with another coresetPoolIndex value among the multiple PUSCHs, the coresetPoolIndex value is different from the another coresetPoolIndex value.

In one embodiment, a coresetPoolIndex value to which one of the multiple PUSCHs is associated is: a coresetPoolIndex value for a ControlResourceSet (CORESET) used to configure resources for a physical downlink control channel (PDCCH) scheduling the one of the multiple PUSCHs.

In one embodiment, a coresetPoolIndex value to which one of the multiple PUSCHs is associated is: a coresetPoolIndex value for a CORESET to which resources for a PDCCH scheduling the one of the multiple PUSCHs belong.

In one embodiment, a coresetPoolIndex value to which one of the multiple PUSCHs is associated is: a coresetPoolIndex value for a CORESET used to receive a DCI for scheduling the one of the multiple PUSCHs.

In one embodiment, a coresetPoolIndex value to which one of the multiple PUSCHs is associated is: a coresetPoolIndex value for a CORESET used to receive a DCI format for scheduling the one of the multiple PUSCHs.

In one embodiment, a coresetPoolIndex value to which one of the multiple PUSCHs is associated is: a coresetPoolIndex value for a ControlResourceSet used to configure a search for a DCI scheduling the one of the multiple PUSCHs.

In one embodiment, a coresetPoolIndex value to which one of the multiple PUSCHs is associated is: a coresetPoolIndex value to which a DCI scheduling the one of the multiple PUSCHs is associated.

In one embodiment, a coresetPoolIndex value to which one of the multiple PUSCHs is associated is: a coresetPoolIndex value for a CORESET to which a DCI scheduling the one of the multiple PUSCHs is associated.

In one embodiment, a coresetPoolIndex value to which one of the multiple PUSCHs is associated is: a coresetPoolIndex value for a ControlResourceSet used to configure resources for a PDCCH activating the one of the multiple PUSCHs.

In one embodiment, a coresetPoolIndex value to which one of the multiple PUSCHs is associated is: a coresetPoolIndex value for a CORESET to which resources for a PDCCH activating the one of the multiple PUSCHs belong.

In one embodiment, a coresetPoolIndex value to which one of the multiple PUSCHs is associated is: a coresetPoolIndex value for a ControlResourceSet used to configure a search for a DCI activating the one of the multiple PUSCHs.

In one embodiment, a coresetPoolIndex value to which one of the multiple PUSCHs is associated is: a coresetPoolIndex value to which a DCI activating the one of the multiple PUSCHs is associated.

In one embodiment, a coresetPoolIndex value to which one of the multiple PUSCHs is associated is: a coresetPoolIndex value for a CORESET to which a DCI activating the one of the multiple PUSCHs is associated.

In one embodiment, a coresetPoolIndex value to which one of the multiple PUSCHs is associated is: a coresetPoolIndex value for a ControlResourceSet used to configure a search for a DCI format scheduling the one of the multiple PUSCHs.

In one embodiment, a coresetPoolIndex value to which one of the multiple PUSCHs is associated is: a coresetPoolIndex value to which a DCI format scheduling the one of the multiple PUSCHs is associated.

In one embodiment, a coresetPoolIndex value to which one of the multiple PUSCHs is associated is: a coresetPoolIndex value for a CORESET to which a DCI format scheduling the one of the multiple PUSCHs is associated.

In one embodiment, a coresetPoolIndex value to which one of the multiple PUSCHs is associated is: a coresetPoolIndex value for a ControlResourceSet used to configure a search for a DCI format activating the one of the multiple PUSCHs.

In one embodiment, a coresetPoolIndex value to which one of the multiple PUSCHs is associated is: a coresetPoolIndex value to which a DCI format activating the one of the multiple PUSCHs is associated.

In one embodiment, a coresetPoolIndex value to which one of the multiple PUSCHs is associated is: a coresetPoolIndex value for a CORESET to which a DCI format activating the one of the multiple PUSCHs is associated.

In one embodiment, a coresetPoolIndex value to which one of the multiple PUSCHs is associated is: a coresetPoolIndex value to which an SRS (Sounding reference signal) resource set for a transmission of the one of the multiple PUSCHs is associated.

In one embodiment, a coresetPoolIndex value to which one of the multiple PUSCHs is associated is: a coresetPoolIndex value to which an SRS resource set for a transmission of the one of the multiple PUSCHs is associated according to configured or pre-defined association rules.

In one embodiment, a coresetPoolIndex value to which one of the multiple PUSCHs is associated is configurable.

In one embodiment, a coresetPoolIndex value to which one of the multiple PUSCHs is associated is indicated by an RRC signaling.

In one embodiment, a coresetPoolIndex value to which any of the multiple PUSCHs is associated is: a coresetPoolIndex value for a ControlResourceSet used to configure resources for a PDCCH scheduling the any of the multiple PUSCHs.

In one embodiment, a coresetPoolIndex value to which any of the multiple PUSCHs is associated is: a coresetPoolIndex value for a CORESET to which resources for a PDCCH scheduling the any of the multiple PUSCHs belong.

In one embodiment, a coresetPoolIndex value to which any of the multiple PUSCHs is associated is: a coresetPoolIndex value for a CORESET used to receive a DCI for scheduling the any of the multiple PUSCHs.

In one embodiment, a coresetPoolIndex value to which any of the multiple PUSCHs is associated is: a coresetPoolIndex value for a CORESET used to receive a DCI format for scheduling the any of the multiple PUSCHs.

In one embodiment, a coresetPoolIndex value to which any of the multiple PUSCHs is associated is: a coresetPoolIndex value for a ControlResourceSet used to configure a search for a DCI scheduling the any of the multiple PUSCHs.

In one embodiment, a coresetPoolIndex value to which any of the multiple PUSCHs is associated is: a coresetPoolIndex value to which a DCI scheduling the any of the multiple PUSCHs is associated.

In one embodiment, a coresetPoolIndex value to which any of the multiple PUSCHs is associated is: a coresetPoolIndex value for a CORESET to which a DCI scheduling the any of the multiple PUSCHs is associated.

In one embodiment, a coresetPoolIndex value to which any of the multiple PUSCHs is associated is: a coresetPoolIndex value for a ControlResourceSet used to configure resources for a PDCCH activating the any of the multiple PUSCHs.

In one embodiment, a coresetPoolIndex value to which any of the multiple PUSCHs is associated is: a coresetPoolIndex value for a CORESET to which resources for a PDCCH activating the any of the multiple PUSCHs belong.

In one embodiment, a coresetPoolIndex value to which any of the multiple PUSCHs is associated is: a coresetPoolIndex value for a ControlResourceSet used to configure a search for a DCI activating the any of the multiple PUSCHs.

In one embodiment, a coresetPoolIndex value to which any of the multiple PUSCHs is associated is: a coresetPoolIndex value to which a DCI activating the any of the multiple PUSCHs is associated.

In one embodiment, a coresetPoolIndex value to which any of the multiple PUSCHs is associated is: a coresetPoolIndex value for a CORESET to which a DCI activating the any of the multiple PUSCHs is associated.

In one embodiment, a coresetPoolIndex value to which any of the multiple PUSCHs is associated is: a coresetPoolIndex value for a ControlResourceSet used to configure a search for a DCI format scheduling the any of the multiple PUSCHs.

In one embodiment, a coresetPoolIndex value to which any of the multiple PUSCHs is associated is: a coresetPoolIndex value to which a DCI format scheduling the any of the multiple PUSCHs is associated.

In one embodiment, a coresetPoolIndex value to which any of the multiple PUSCHs is associated is: a coresetPoolIndex value for a CORESET to which a DCI format scheduling the any of the multiple PUSCHs is associated.

In one embodiment, a coresetPoolIndex value to which any of the multiple PUSCHs is associated is: a coresetPoolIndex value for a ControlResourceSet used to configure a search for a DCI format activating the any of the multiple PUSCHs.

In one embodiment, a coresetPoolIndex value to which any of the multiple PUSCHs is associated is: a coresetPoolIndex value to which a DCI format activating the any of the multiple PUSCHs is associated.

In one embodiment, a coresetPoolIndex value to which any of the multiple PUSCHs is associated is: a coresetPoolIndex value for a CORESET to which a DCI format activating the any of the multiple PUSCHs is associated.

In one embodiment, a coresetPoolIndex value to which any of the multiple PUSCHs is associated is: a coresetPoolIndex value to which an SRS resource set used for a transmission of the any PUSCH of the multiple PUSCHs is associated.

In one embodiment, a coresetPoolIndex value to which any of the multiple PUSCHs is associated is: a coresetPoolIndex value to which an SRS resource set for a transmission of the any of the multiple PUSCHs is associated according to configured or pre-defined association rules.

In one embodiment, a coresetPoolIndex value to which any of the multiple PUSCHs is associated is configurable.

In one embodiment, a coresetPoolIndex value to which any of the multiple PUSCHs is associated is indicated by an RRC signaling.

In one embodiment, a coresetPoolIndex value is a value of coresetPoolIndex.

In one embodiment, the coresetPoolIndex is a parameter indicating an index of a CORESET pool.

In one embodiment, the coresetPoolIndex is an RRC-layer parameter.

In one embodiment, a coresetPoolIndex value is an index of a CORESET pool.

In one embodiment, a coresetPoolIndex value is either 0 or 1.

In one embodiment, the meaning of the expression that "a first PUCCH is overlapping with the multiple PUSCHs" is: the first PUCCH has an overlapping with each of the multiple PUSCHs in time domain.

In one embodiment, the multiple PUSCHs are in a same slot.

In one embodiment, the multiple PUSCHs occupy more than one slot.

In one embodiment, the multiple PUSCHs are all on a serving cell with a smallest ServCellIndex.

In one embodiment, the multiple PUSCHs are all located on a primary cell.

In one embodiment, a timeline condition for UCI multiplexing is satisfied.

In one embodiment, aperiodic CSI is not multiplexed in any of the multiple PUSCHs.

In one embodiment, aperiodic or semi-persistent CSI reports are not multiplexed into any of the multiple PUSCHs.

In one embodiment, the meaning of the expression that "a first UCI is associated with the first PUCCH" is: the first PUCCH carries the first UCI.

In one embodiment, the meaning of the expression that "a first UCI is associated with the first PUCCH" is: the first UCI would be multiplexed into the first PUCCH.

In one embodiment, the meaning of the expression that "a first UCI is associated with the first PUCCH" is: the first PUCCH is a PUCCH determined to carry the first UCI before an overlapping between the PUCCH and the PUSCH is resolved.

In one embodiment, the meaning of the expression that "a first UCI is associated with the first PUCCH" is: the first PUCCH is reserved for a transmission of the first UCI.

In one embodiment, the meaning of the expression that "a first UCI is associated with the first PUCCH" is: the first PUCCH is indicated to be used for a transmission of the first UCI.

In one embodiment, the meaning of the expression that "a first UCI is associated with the first PUCCH" is: PUCCH resources for the first PUCCH are determined for a transmission of the first UCI.

In one embodiment, the meaning of the expression that "a first UCI is associated with the first PUCCH" is: PUCCH resources for the first PUCCH are configured for a transmission of the first UCI.

In one embodiment, the meaning of the expression that "a first UCI is associated with the first PUCCH" is: the first PUCCH is configured for reporting of the first UCI.

In one embodiment, the first PUCCH is a PUCCH specific to the first UCI.

In one embodiment, the first UCI (Uplink control information) is HARQ-ACK (Hybrid automatic repeat request acknowledgement) information.

In one embodiment, the first UCI comprises HARQ-ACK information.

In one embodiment, the first UCI comprises HARQ-ACK information and CSI.

In one embodiment, the first UCI does not include HARQ-ACK information.

In one embodiment, the first UCI comprises a CSI.

In one embodiment, the first UCI is a CSI.

In one embodiment, the first UCI is a periodic CSI report.

In one embodiment, the first UCI comprises a periodic CSI report.

In one embodiment, the first UCI is a semi-persistent CSI Report.

In one embodiment, the first UCI comprises a semi-persistent CSI Report.

In one embodiment, the distribution of the multiple PUSCHs refers to: a distribution of the multiple PUSCHs in time domain.

In one embodiment, the distribution of the multiple PUSCHs refers to: whether there exists an earliest PUSCH in the multiple PUSCHs.

In one embodiment, the distribution of the multiple PUSCHs refers to: in the multiple PUSCHs, which PUSCH is an earliest PUSCH associated with a target coresetPoolIndex value.

In one embodiment, the meaning of the expression that "a multiplexing relation between the first UCI and the multiple PUSCHs is related to a distribution of the multiple PUSCHs" is: a multiplexing relation between the first UCI and the multiple PUSCHs is related to whether there exists an earliest PUSCH in the multiple PUSCHs.

In one embodiment, the meaning of the expression that "a multiplexing relation between the first UCI and the multiple PUSCHs is related to a distribution of the multiple PUSCHs" is: the first UCI is multiplexed onto an earliest PUSCH associated with a target coresetPoolIndex value in the multiple PUSCHs, and the target coresetPoolIndex value is default.

In one embodiment, the meaning of the expression that "a multiplexing relation between the first UCI and the multiple PUSCHs is related to a distribution of the multiple PUSCHs" is: the first UCI is multiplexed onto an earliest PUSCH associated with a target coresetPoolIndex value in the multiple PUSCHs, and the target coresetPoolIndex value is configurable.

In one embodiment, the meaning of the expression that "a multiplexing relation between the first UCI and the multiple PUSCHs is related to a distribution of the multiple PUSCHs" is: the first UCI is multiplexed onto an earliest PUSCH associated with a target coresetPoolIndex value in the multiple PUSCHs, and the first PUCCH is associated with the target coresetPoolIndex value.

In one embodiment, a multiplexing relation between the first UCI and the multiple PUSCHs is related to whether there exists an earliest PUSCH in the multiple PUSCHs.

In one embodiment, the first UCI is multiplexed onto an earliest PUSCH associated with a target coresetPoolIndex value in the multiple PUSCHs, and the target coresetPoolIndex value is default.

In one embodiment, the first UCI is multiplexed onto an earliest PUSCH associated with a target coresetPoolIndex value in the multiple PUSCHs, and the target coresetPoolIndex value is configurable.

In one embodiment, the first UCI is multiplexed onto an earliest PUSCH associated with a target coresetPoolIndex value in the multiple PUSCHs, and the first PUCCH is associated with the target coresetPoolIndex value.

In one embodiment, the first PUCCH is not triggered by a DCI.

In one embodiment, the first PUCCH is not triggered by a DCI format.

In one embodiment, the first PUCCH is semi-statically configured.

In one embodiment, ackNackFeedbackMode is configured as separate.

In one embodiment, ackNackFeedbackMode is configured as joint.

### Embodiment 2

Embodiment 2 illustrates a schematic diagram of a network architecture according to the present application, as shown in FIG. 2.

FIG. 2 illustrates a network architecture 200 of 5G NR, Long-Term Evolution (LTE) and Long-Term Evolution Advanced (LTE-A) systems. The NR 5G or LTE network architecture 200 may be called an Evolved Packet System (EPS) 200 or other appropriate terms. The EPS 200 may comprise one or more UEs 201, an NG-RAN 202, an Evolved Packet Core/ 5G-Core Network (EPC/5G-CN) 210, a Home Subscriber Server (HSS) 220 and an Internet Service 230. The EPS 200 may be interconnected with other access networks. For simple description, the entities/interfaces are not shown. As shown in FIG. 2, the EPS 200 provides packet switching services. Those skilled in the art will readily understand that various concepts presented throughout the present application can be extended to networks providing circuit switching services or other cellular networks. The NG-RAN 202 comprises an NR node B (gNB) 203 and other gNBs 204. The gNB 203 provides UE 201-oriented user plane and control plane protocol terminations. The gNB 203 may be connected to other gNBs 204 via an Xn interface (for example, backhaul). The gNB 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The gNB 203 provides an access point of the EPC/5G-CN 210 for the UE 201. Examples of the UE 201 include cellular phones, smart phones, Session Initiation Protocol (SIP) phones, laptop computers, Personal Digital Assistant (PDA), satellite Radios, non-terrestrial base station communications, Satellite Mobile Communications, Global Positioning Systems (GPSs), multimedia devices, video devices, digital audio players (for example, MP3 players), cameras, game consoles, unmanned aerial vehicles (UAV), aircrafts, narrow-band Internet of Things (loT) devices, machinetype communication devices, land vehicles, automobiles, wearable devices, or any other similar functional devices. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The gNB 203 is connected to the EPC/5G-CN 210 via an S1/NG interface. The EPC/5G-CN 210 comprises a Mobility Management Entity (MME)/ Authentication Management Field (AMF)/ User Plane Function (UPF) 211, other MMEs/ AMFs/ UPFs 214, a Service Gateway (S-GW) 212 and a Packet Date Network Gateway (P-GW) 213. The MME/AMF/UPF 211 is a control node for processing a signaling between the UE 201 and the EPC/5G-CN 210. Generally, the MME/AMF/UPF 211 provides bearer and connection management. All user Internet Protocol (IP) packets are transmitted through the S-GW 212, the S-GW 212 is connected to the P-GW 213. The P-GW 213 provides UE IP address allocation and other functions. The P-GW 213 is connected to the Internet Service 230. The Internet Service 230 comprises IP services corresponding to operators, specifically including Internet, Intranet, IP Multimedia Subsystem (IMS) and Packet Switching Streaming Services (PSS).

In one embodiment, the UE 201 corresponds to the first node in the present application.

In one embodiment, the UE 201 corresponds to the second node in the present application.

In one embodiment, the UE 201 is a UE.

In one embodiment, the gNB 203 corresponds to the first node in the present application.

In one embodiment, the gNB 203 corresponds to the second node in the present application.

In one embodiment, the UE 201 corresponds to the first node in the present application, and the gNB 203 corresponds to the second node in the present application.

In one embodiment, the gNB 203 is a MarcoCellular base station.

In one embodiment, the gNB 203 is a Micro Cell base station.

In one embodiment, the gNB 203 is a PicoCell base station.

In one embodiment, the gNB 203 is a Femtocell.

In one embodiment, the gNB 203 is a base station that supports large delay differences.

In one embodiment, the gNB 203 is a flight platform.

In one embodiment, the gNB 203 is satellite equipment.

### Embodiment 3

Embodiment 3 illustrates a schematic diagram of an example of a radio protocol architecture of a user plane and a control plane according to one embodiment of the present application, as shown in FIG. 3. FIG. 3 is a schematic diagram illustrating an embodiment of a radio protocol architecture of a user plane 350 and a control plane 300. In FIG. 3, the radio protocol architecture for a first communication node (UE, gNB or an RSU in V2X) and a second communication node (gNB, UE or an RSU in V2X), or between two UEs is represented by three layers, which are a layer 1, a layer 2 and a layer 3, respectively. The layer 1 (L1) is the lowest layer and performs signal processing functions of various PHY layers. The L1 is called PHY301 in the present application. The layer 2 (L2) 305 is above the PHY 301, and is in charge of a link between a first communication node and a second communication node, as well as two UEs via the PHY 301. L2 305 comprises a Medium Access Control (MAC) sublayer 302, a Radio Link Control (RLC) sublayer 303 and a Packet Data Convergence Protocol (PDCP) sublayer 304. All the three sublayers terminate at the second communication node. The PDCP sublayer 304 provides multiplexing among variable radio bearers and logical channels. The PDCP sublayer 304 provides security by encrypting a packet and provides support for a first communication node handover between second communication nodes. The RLC sublayer 303 provides segmentation and reassembling of a higher-layer packet, retransmission of a lost packet, and reordering of a data packet so as to compensate the disordered receiving caused by HARQ. The MAC sublayer 302 provides multiplexing between a logical channel and a transport channel. The MAC sublayer 302 is also responsible for allocating between first communication nodes various radio resources (i.e., resource block) in a cell. The MAC sublayer 302 is also in charge of HARQ operation. The Radio Resource Control (RRC) sublayer 306 in layer 3 (L3) of the control plane 300 is responsible for acquiring radio resources (i.e., radio bearer) and configuring the lower layer with an RRC signaling between a second communication node and a first communication node device. The radio protocol architecture of the user plane 350 comprises layer 1 (L1) and layer 2 (L2). In the user plane 350, the radio protocol architecture for the first communication node and the second communication node is almost the same as the corresponding layer and sublayer in the control plane 300 for physical layer 351, PDCP sublayer 354, RLC sublayer 353 and MAC sublayer 352 in L2 layer 355, but the PDCP sublayer 354 also provides a header compression for a higher-layer packet so as to reduce a radio transmission overhead. The L2 layer 355 in the user plane 350 also includes Service Data Adaptation Protocol (SDAP) sublayer 356, which is responsible for the mapping between QoS flow and Data Radio Bearer (DRB) to support the diversity of traffic. Although not described in FIG. 3, the first communication node may comprise several higher layers above the L2 layer 355, such as a network layer (e.g., IP layer) terminated at a P-GW of the network side and an application layer terminated at the other side of the connection (e.g., a peer UE, a server, etc.).

In one embodiment, the radio protocol architecture in FIG. 3 is applicable to the first node in the present application.

In one embodiment, the radio protocol architecture in FIG. 3 is applicable to the second node in the present application.

In one embodiment, the multiple signalings in the present application are generated by the PHY 301.

In one embodiment, one of the multiple signalings in the present application is generated by the PHY 301.

In one embodiment, one of the multiple signalings in the present application is generated by the RRC sublayer 306.

In one embodiment, the multiple PUSCHs in the present application are generated by the PHY 351.

### Embodiment 4

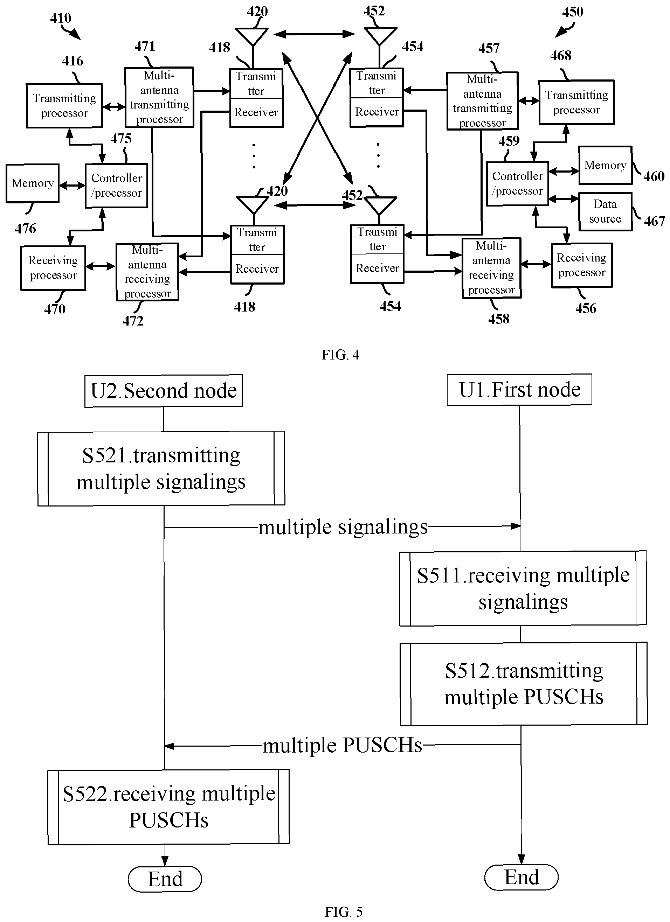

Embodiment 4 illustrates a schematic diagram of a first communication device and a second communication device in the present application, as shown in FIG. 4. FIG. 4 is a block diagram of a first communication device 410 in communication with a second communication device 450 in an access network.

The first communication device 410 comprises a controller/ processor 475, a memory 476, a receiving processor 470, a transmitting processor 416, a multi-antenna receiving processor 472, a multi-antenna transmitting processor 471, a transmitter/ receiver 418 and an antenna 420.

The second communication device 450 comprises a controller/ processor 459, a memory 460, a data source 467, a transmitting processor 468, a receiving processor 456, a multi-antenna transmitting processor 457, a multi-antenna receiving processor 458, a transmitter/receiver 454 and an antenna 452.

In a transmission from the first communication device 410 to the second communication device 450, at the first communication device 410, a higher layer packet from the core network is provided to a controller/ processor 475. The controller/processor 475 provides a function of the L2 layer. In the transmission from the first communication device 410 to the first communication device 450, the controller/ processor 475 provides header compression, encryption, packet segmentation and reordering, and multiplexing between a logical channel and a transport channel, and radio resources allocation to the second communication device 450 based on various priorities. The controller/ processor 475 is also responsible for retransmission of a lost packet and a signaling to the second communication device 450. The transmitting processor 416 and the multi-antenna transmitting processor 471 perform various signal processing functions used for the L1 layer (that is, PHY). The transmitting processor 416 performs coding and interleaving so as to ensure an FEC (Forward Error Correction) at the second communication device 450, and the mapping to signal clusters corresponding to each modulation scheme (i.e., BPSK, QPSK, M-PSK, M-QAM, etc.). The multi-antenna transmitting processor 471 performs digital spatial precoding, including codebook-based precoding and non-codebook-based precoding, and beamforming on encoded and modulated symbols to generate one or more spatial streams. The transmitting processor 416 then maps each spatial stream into a subcarrier. The mapped symbols are multiplexed with a reference signal (i.e., pilot frequency) in time domain and/or frequency domain, and then they are assembled through Inverse Fast Fourier Transform (IFFT) to generate a physical channel carrying time-domain multi-carrier symbol streams. After that the multi-antenna transmitting processor 471 performs transmission analog precoding/beamforming on the time-domain multi-carrier symbol streams. Each transmitter 418 converts a baseband multicarrier symbol stream provided by the multi-antenna transmitting processor 471 into a radio frequency (RF) stream. Each radio frequency stream is later provided to different antennas 420.

In a transmission from the first communication device 410 to the second communication device 450, at the second communication device 450, each receiver 454 receives a signal via a corresponding antenna 452. Each receiver 454 recovers information modulated to the RF carrier, converts the radio frequency stream into a baseband multicarrier symbol stream to be provided to the receiving processor 456. The receiving processor 456 and the multi-antenna receiving processor 458 perform signal processing functions of the L1 layer. The multi-antenna receiving processor 458 performs receiving analog precoding/beamforming on a baseband multicarrier symbol stream from the receiver 454. The receiving processor 456 converts the baseband multicarrier symbol stream after receiving the analog precoding/beamforming from time domain into frequency domain using FFT. In frequency domain, a physical layer data signal and a reference signal are de-multiplexed by the receiving processor 456, wherein the reference signal is used for channel estimation, while the data signal is subjected to multi-antenna detection in the multi-antenna receiving processor 458 to recover any the second communication device-targeted spatial stream. Symbols on each spatial stream are demodulated and recovered in the receiving processor 456 to generate a soft decision. Then the receiving processor 456 decodes and de-interleaves the soft decision to recover the higher-layer data and control signal transmitted on the physical channel by the first communication node 410. Next, the higher-layer data and control signal are provided to the controller/processor 459. The controller/processor 459 performs functions of the L2 layer. The controller/processor 459 can be connected to a memory 460 that stores program code and data. The memory 460 can be called a computer readable medium. In the transmission from the first communication device 410 to the second communication device 450, the controller/ processor 459 provides demultiplexing between a transport channel and a logical channel, packet reassembling, decryption, header decompression and control signal processing so as to recover a higher-layer packet from the core network. The higher-layer packet is later provided to all protocol layers above the L2 layer, or various control signals can be provided to the L3 layer for processing.

In a transmission from the second communication device 450 to the first communication device 410, at the second communication device 450, the data source 467 is configured to provide a higher-layer packet to the controller/processor 459. The data source 467 represents all protocol layers above the L2 layer. Similar to a transmitting function of the first communication device 410 described in the transmission from the first communication device 410 to the second communication device 450, the controller/processor 459 performs header compression, encryption, packet segmentation and reordering, and multiplexing between a logical channel and a transport channel based on radio resources allocation so as to provide the L2 layer functions used for the user plane and the control plane. The controller/processor 459 is also responsible for retransmission of a lost packet, and a signaling to the first communication device 410. The transmitting processor 468 performs modulation mapping and channel coding. The multi-antenna transmitting processor 457 implements digital multi-antenna spatial precoding, including codebook-based precoding and non-codebook-based precoding, as well as beamforming. Following that, the generated spatial streams are modulated into multicarrier/single-carrier symbol streams by the transmitting processor 468, and then modulated symbol streams are subjected to analog precoding/beamforming in the multi-antenna transmitting processor 457 and provided from the transmitters 454 to each antenna 452. Each transmitter 454 first converts a baseband symbol stream provided by the multi-antenna transmitting processor 457 into a radio frequency symbol stream, and then provides the radio frequency symbol stream to the antenna 452.

In the transmission from the second communication device 450 to the first communication device 410, the function of the first communication device 410 is similar to the receiving function of the second communication device 450 described in the transmission from the first communication device 410 to the second communication device 450. Each receiver 418 receives a radio frequency signal via a corresponding antenna 420, converts the received radio frequency signal into a baseband signal, and provides the baseband signal to the multi-antenna receiving processor 472 and the receiving processor 470. The receiving processor 470 and multi-antenna receiving processor 472 collectively provide functions of the L1 layer. The controller/processor 475 provides functions of the L2 layer. The controller/processor 475 can be connected with the memory 476 that stores program code and data. The memory 476 can be called a computer readable medium. In the transmission from the second communication device 450 to the first communication device 410, the controller/processor 475 provides de-multiplexing between a transport channel and a logical channel, packet reassembling, decryption, header decompression, control signal processing so as to recover a higher-layer packet from the UE 450. The higher-layer packet coming from the controller/processor 475 may be provided to the core network.

In one embodiment, the first node in the present application comprises the second communication device 450, and the second node in the present application comprises the first communication device 410.

In one subembodiment of the above embodiment, the first node is a UE, and the second node is a UE.

In one subembodiment of the above embodiment, the first node is a UE, and the second node is a relay node.

In one subembodiment of the above embodiment, the first node is a relay node, and the second node is a UE.

In one subembodiment of the above embodiment, the first node is a UE, and the second node is a base station.

In one subembodiment of the above embodiment, the first node is a relay node, and the second node is a base station.

In one subembodiment of the above embodiment, the second node is a UE, and the first node is a base station.

In one subembodiment of the above embodiment, the second node is a relay node, and the first node is a base station.

In one subembodiment of the above embodiment, the second communication device 450 comprises: at least one controller/ processor; the at least one controller/ processor is responsible for HARQ operation.

In one subembodiment of the above embodiment, the first communication device 410 comprises: at least one controller/ processor; the at least one controller/ processor is responsible for HARQ operation.

In one subembodiment of the above embodiment, the first communication device 410 comprises: at least one controller/ processor; the at least one controller/ processor is responsible for error detection using ACK and/ or NACK protocols as a way to support HARQ operation.

In one embodiment, the second communication device 450 comprises at least one processor and at least one memory. The at least one memory comprises computer program codes; the at least one memory and the computer program codes are configured to be used in collaboration with the at least one processor. The second communication device 450 at least: receives multiple signalings; and transmits multiple PUSCHs, the multiple PUSCHs are on a same serving cell, the multiple PUSCHs respectively depend on the multiple signalings, there exist PUSCHs associated with different coresetPoolIndex values among the multiple PUSCHs; herein, a first PUCCH overlaps with the multiple PUSCHs, and a first UCI is associated with the first PUCCH; a multiplexing relation between the first UCI and the multiple PUSCHs is related to a distribution of the multiple PUSCHs.

In one subembodiment of the above embodiment, the second communication device 450 corresponds to the first node in the present application.

In one embodiment, the second communication device 450 comprises a memory that stores a computer readable instruction program. The computer readable instruction program generates an action when executed by at least one processor. The action includes: receiving multiple signalings; and transmitting multiple PUSCHs, the multiple PUSCHs being on a same serving cell, the multiple PUSCHs respectively depending on the multiple signalings, there existing PUSCHs associated with different coresetPoolIndex values among the multiple PUSCHs; herein, a first PUCCH overlaps with the multiple PUSCHs, and a first UCI is associated with the first PUCCH; a multiplexing relation between the first UCI and the multiple PUSCHs is related to a distribution of the multiple PUSCHs.

In one subembodiment of the above embodiment, the second communication device 450 corresponds to the first node in the present application.

In one embodiment, the first communication device 410 comprises at least one processor and at least one memory. The at least one memory comprises computer program codes; the at least one memory and the computer program codes are configured to be used in collaboration with the at least one processor. The first communication device 410 at least: transmits multiple signalings; and receives multiple PUSCHs, the multiple PUSCHs are on a same serving cell, the multiple PUSCHs respectively depend on the multiple signalings, there exist PUSCHs associated with different coresetPoolIndex values among the multiple PUSCHs; herein, a first PUCCH overlaps with the multiple PUSCHs, and a first UCI is associated with the first PUCCH; a multiplexing relation between the first UCI and the multiple PUSCHs is related to a distribution of the multiple PUSCHs.

In one subembodiment of the above embodiment, the first communication device 410 corresponds to the second node in the present application.

In one embodiment, the first communication device 410 comprises a memory that stores a computer readable instruction program. The computer readable instruction program generates an action when executed by at least one processor. The action includes: transmitting multiple signalings; and receiving multiple PUSCHs, the multiple PUSCHs being on a same serving cell, the multiple PUSCHs respectively depending on the multiple signalings, there existing PUSCHs associated with different coresetPoolIndex values among the multiple PUSCHs; herein, a first PUCCH overlaps with the multiple PUSCHs, and a first UCI is associated with the first PUCCH; a multiplexing relation between the first UCI and the multiple PUSCHs is related to a distribution of the multiple PUSCHs.

In one subembodiment of the above embodiment, the first communication device 410 corresponds to the second node in the present application.

In one embodiment, at least one of the antenna 452, the receiver 454, the multi-antenna receiving processor 458, the receiving processor 456, the controller / processor 459, the memory 460, or the data source 467 is used to receive the multiple signalings in the present application.

In one embodiment, at least one of the antenna 420, the transmitter 418, the multi-antenna transmitting processor 471, the transmitting processor 416, the controller/ processor 475, or the memory 476 is used to transmit the multiple signalings.

In one embodiment, at least one of the antenna 452, the transmitter 454, the multi-antenna transmitting processor 458, the transmitting processor 468, the controller/ processor 459, the memory 460, or the data sources 467 is used to transmit the multiple PUSCHs in the present application.

In one embodiment, at least one of the antenna 420, the receiver 418, the multi-antenna receiving processor 472, the receiving processor 470, the controller/ processor 475, or the memory 476 is used to receive the multiple PUSCHs in the present application.

### Embodiment 5

Embodiment 5 illustrates a flowchart of signal transmission according to one embodiment in the present application, as shown in FIG. 5. In FIG. 5, a first node U1 and a second node U2 are in communications via an air interface.

The first node U1 receives multiple signalings in step S511; transmits multiple PUSCHs in step S512.

The second node U2 transmits multiple signalings in step S521; receives multiple PUSCHs in step S522.

In embodiment 5, the multiple PUSCHs are on a same serving cell, the multiple PUSCHs respectively depend on the multiple signalings, there exist PUSCHs associated with different coresetPoolIndex values among the multiple PUSCHs; a first PUCCH overlaps with the multiple PUSCHs, and a first UCI is associated with the first PUCCH; the first UCI is multiplexed onto an earliest PUSCH associated with a target coresetPoolIndex value among the multiple PUSCHs.

In one subembodiment of embodiment 5, the first UCI is a CSI; the target coresetPoolIndex value is default.

In one subembodiment of the above embodiment 5, the first UCI comprises HARQ-ACK information; the first PUCCH is associated with the target coresetPoolIndex value.

In one embodiment, the first node U1 is the first node in the present application.

In one embodiment, the second node U2 is the second node in the present application.

In one embodiment, the first node U1 is a UE.

In one embodiment, the first node U1 is a base station.

In one embodiment, the second node U2 is a base station.

In one embodiment, the second node U2 is a UE.

In one embodiment, an air interface between the second node U2 and the first node U1 is a Uu interface.

In one embodiment, an air interface between the second node U2 and the first node U1 comprises a cellular link.

In one embodiment, an air interface between the second node U2 and the first node U1 comprises a radio interface between a base station and a UE.

In one embodiment, an air interface between the second node U2 and the first node U1 comprises a radio interface between a satellite and a UE.

In one embodiment, an air interface between the second node U2 and the first node U1 comprises a radio interface between a UE and a UE.

In one embodiment, a problem to be solved in the present application comprises: how to perform UCI multiplexing simply and effectively.

In one embodiment, a problem to be solved in the present application comprises: how to improve the uplink transmission performance.

In one embodiment, a problem to be solved in the present application comprises: how to improve the transmission performance of UCI.

In one embodiment, a problem to be solved in the present application comprises: how to achieve UCI multiplexing upon simultaneous transmission of multiple panels.

In one embodiment, a problem to be solved in the present application comprises: what is the multiplexing relation between UCI and the multiple PUSCHs in the case where a PUCCH overlaps with multiple PUSCHs and there exist PUSCHs associated with different coresetPoolIndex values in the multiple PUSCHs.

In one embodiment, a problem to be solved in the present application comprises: in the case where a PUCCH overlaps with multiple PUSCHs and there exist PUSCHs associated with different coresetPoolIndex values in the multiple PUSCHs, which one of the multiple PUSCHs is the UCI multiplexed to.

In one embodiment, a problem to be solved in the present application comprises: in the case where a PUCCH overlaps with multiple PUSCHs and there exist PUSCHs associated with different coresetPoolIndex values in the multiple PUSCHs, which PUSCH(s) of the multiple PUSCHs is the UCI multiplexed onto.

In one embodiment, a problem to be solved in the present application comprises: in the case where the PUCCH overlaps with multiple PUSCHs and there exist PUSCHs associated with different coresetPoolIndex values in the multiple PUSCHs, whether the UCI is multiplexed onto one of the multiple PUSCHs.

In one embodiment, a problem to be solved in the present application comprises: how to avoid the decrease in communication performance incurred by unclear definition of UCI multiplexing.

### Embodiment 6

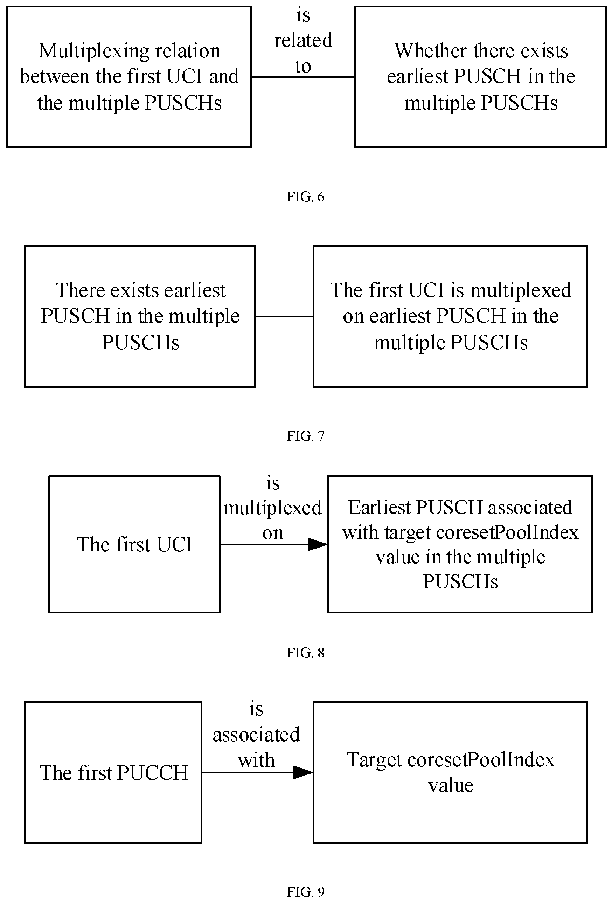

Embodiment 6 illustrates a schematic diagram of a multiplexing relation between a first UCI and multiple PUSCHs according to one embodiment of the present application, as shown in FIG. 6.

In embodiment 6, a multiplexing relation between the first UCI and the multiple PUSCHs is related to whether there exists an earliest PUSCH in the multiple PUSCHs.

In one embodiment, the multiplexing relation between the first UCI and the multiple PUSCHs refers to: whether the first UCI is multiplexed onto one of the multiple PUSCHs.

In one embodiment, the multiplexing relation between the first UCI and the multiple PUSCHs refers to: whether the first UCI is multiplexed onto only one of the multiple PUSCHs.

In one embodiment, the multiplexing relation between the first UCI and the multiple PUSCHs refers to: the first UCI is multiplexed onto which of the multiple PUSCHs.

In one embodiment, the multiplexing relation between the first UCI and the multiple PUSCHs refers to: which PUSCH(s) in the multiple PUSCHs is the first UCI multiplexed onto.

In one embodiment, a multiplexing relation between the first UCI and the multiple PUSCHs depends on whether there exists an earliest PUSCH in the multiple PUSCHs.

In one embodiment, the meaning of the expression that "a multiplexing relation between the first UCI and the multiple PUSCHs is related to whether there exists an earliest PUSCH in the multiple PUSCHs" is: a multiplexing relation between the first UCI and the multiple PUSCHs is related to whether the multiple PUSCHs are overlapping in time domain.

In one embodiment, a chronological relation between any 2 of the multiple PUSCHs is determined according to start time.

In one embodiment, a chronological relation between any 2 of the multiple PUSCHs is determined according to end time.

In one embodiment, whether there exists an earliest PUSCH in the multiple PUSCHs is related to whether the multiple PUSCHs are overlapping.

In one embodiment, when each of the multiple PUSCHs is not an earliest PUSCH, there does not exist an earliest PUSCH in the multiple PUSCHs.

In one embodiment, when two of the multiple PUSCHs are overlapping in time domain, neither of these two PUSCHs is an earliest PUSCH in the multiple PUSCHs.

In one embodiment, when start times of two of the multiple PUSCHs are the same, the two PUSCHs are not earliest PUSCHs in the multiple PUSCHs.

In one embodiment, when end times of two of the multiple PUSCHs are the same, the two PUSCHs are not earliest PUSCHs in the multiple PUSCHs.

In one embodiment, when two of the multiple PUSCHs are completely overlapping in time domain, neither of these two PUSCHs is an earliest PUSCH in the multiple PUSCHs.

In one embodiment, a given PUSCH is one of the multiple PUSCHs.

In one embodiment, when a start time of the given PUSCH is earlier than a start time of each PUSCH other than the given PUSCH in the multiple PUSCHs, the given PUSCH is the earliest PUSCH in the multiple PUSCHs.

In one embodiment, when an end time of the given PUSCH is earlier than an end time of each PUSCH other than the given PUSCH in the multiple PUSCHs, the given PUSCH is the earliest PUSCH in the multiple PUSCHs.

In one embodiment, when an end time of the given PUSCH is earlier than a start time of each PUSCH other than the given PUSCH in the multiple PUSCHs, the given PUSCH is the earliest PUSCH in the multiple PUSCHs

In one embodiment, when an end time of the given PUSCH is not later than a start time of each PUSCH other than the given PUSCH in the multiple PUSCHs, the given PUSCH is the earliest PUSCH in the multiple PUSCHs.

In one embodiment, when a start time of the given PUSCH is not earlier than a start time of a PUSCH other than the given PUSCH in the multiple PUSCHs, the given PUSCH is not an earliest PUSCH in the multiple PUSCHs.

In one embodiment, when an end time of the given PUSCH is not earlier than an end time of a PUSCH other than the given PUSCH in the multiple PUSCHs, the given PUSCH is not an earliest PUSCH in the multiple PUSCHs.

In one embodiment, when a start time of the given PUSCH is later than a start time of a PUSCH other than the given PUSCH in the multiple PUSCHs, the given PUSCH is not an earliest PUSCH in the multiple PUSCHs.

In one embodiment, when an end time of the given PUSCH is later than an end time of a PUSCH other than the given PUSCH in the multiple PUSCHs, the given PUSCH is not an earliest PUSCH in the multiple PUSCHs.

In one embodiment, when an end time of the given PUSCH is not earlier than a start time of a PUSCH other than the given PUSCH in the multiple PUSCHs, the given PUSCH is not an earliest PUSCH in the multiple PUSCHs.

In one embodiment, when an end time of the given PUSCH is later than a start time of a PUSCH other than the given PUSCH in the multiple PUSCHs, the given PUSCH is not an earliest PUSCH in the multiple PUSCHs.

In one embodiment, when the given PUSCH has an overlapping with a PUSCH other than the given PUSCH in the multiple PUSCHs in time domain, the given PUSCH is not an earliest PUSCH in the multiple PUSCHs.

In one embodiment, when the given PUSCH are completely overlapping with a PUSCH other than the given PUSCH in the multiple PUSCHs in time domain, the given PUSCH is not an earliest PUSCH in the multiple PUSCHs.

In one embodiment, when any two of the multiple PUSCHs are non-overlapping in time domain, there exists an earliest PUSCH in the multiple PUSCHs.

In one embodiment, the multiple PUSCHs are two PUSCHs; the meaning of there existing an earliest PUSCH in the multiple PUSCHs is: start time of the multiple PUSCHs is different; the meaning of there not existing an earliest PUSCH in the multiple PUSCHs is: start time of the multiple PUSCHs is the same.

In one embodiment, the multiple PUSCHs are two PUSCHs; the meaning of there existing an earliest PUSCH in the multiple PUSCHs is: end time of the multiple PUSCHs is different; the meaning of there not existing an earliest PUSCH in the multiple PUSCHs is: end time of the multiple PUSCHs is the same.

In one embodiment, the multiple PUSCHs are two PUSCHs; the meaning of there existing an earliest PUSCH in the multiple PUSCHs is: the multiple PUSCHs are not overlapping in time domain; the meaning of there not existing an earliest PUSCH in the multiple PUSCHs is: the multiple PUSCHs are overlapping in time domain.

In one embodiment, when the first UCI is multiplexed onto one of the multiple PUSCHs, the first UCI is transmitted on the PUSCH.

In one embodiment, when the first UCI is multiplexed onto one of the multiple PUSCHs, the first UCI and at least one transport block are transmitted together on the PUSCH.

### Embodiment 7

Embodiment 7 illustrates a schematic diagram of a multiplexing relation between a first UCI and multiple PUSCHs according to one embodiment of the present application, as shown in FIG. 7.

In embodiment 7, when there exists an earliest PUSCH in the multiple PUSCHs, the first UCI is multiplexed onto an earliest PUSCH in the multiple PUSCHs.

In one embodiment, when there exists an earliest PUSCH in the multiple PUSCHs, the first UCI is only multiplexed onto the earliest PUSCH in the multiple PUSCHs.

In one embodiment, when there does not exist an earliest PUSCH in the multiple PUSCHs, the first UCI is not multiplexed onto any of the multiple PUSCHs.

In one embodiment, when there does not exist an earliest PUSCH in the multiple PUSCHs, the first UCI is dropped to be transmitted.

In one embodiment, when there does not exist an earliest PUSCH in the multiple PUSCHs, the first UCI is multiplexed onto more than one PUSCH among the multiple PUSCHs.

In one embodiment, when there does not exist an earliest PUSCH in the multiple PUSCHs, the first UCI is multiplexed onto each PUSCH among the multiple PUSCHs.

In one embodiment, when there does not exist an earliest PUSCH in the multiple PUSCHs, the first UCI is multiplexed on a PUSCH associated with a target coresetPoolIndex value in the multiple PUSCHs, and the target coresetPoolIndex value is default.

In one subembodiment of the above embodiment, the target coresetPoolIndex value is 0.

In one subembodiment of the above embodiment, the target coresetPoolIndex value is 1.

In one embodiment, the meaning of the expression that "the target coresetPoolIndex value is default" is: the target coresetPoolIndex value is 0.

In one embodiment, the meaning of the expression that "the target coresetPoolIndex value is default" is: the target coresetPoolIndex value is 1.

In one embodiment, the meaning of the expression that "the target coresetPoolIndex value is default" is: the target coresetPoolIndex value is fixed at 0.

In one embodiment, the meaning of the expression that "the target coresetPoolIndex value is default" is: the target coresetPoolIndex value is fixed at 1.

In one embodiment, for any PUSCH associated with the target coresetPoolIndex value in the multiple PUSCHs, the associated coresetPoolIndex value is the target coresetPoolIndex value.

In one embodiment, when there does not exist an earliest PUSCH in the multiple PUSCHs, the first UCI is multiplexed on a PUSCH associated with a target coresetPoolIndex value in the multiple PUSCHs, and the target coresetPoolIndex value is configurable.

In one subembodiment of the above embodiment, the target coresetPoolIndex value is configured by an RRC signaling.

In one subembodiment of the above embodiment, the target coresetPoolIndex value is configured by a MAC CE (Control Element).

In one embodiment, when there does not exist an earliest PUSCH in the multiple PUSCHs, the first UCI is multiplexed onto an earliest PUSCH associated with a target coresetPoolIndex value in the multiple PUSCHs, and the first PUCCH is associated with the target coresetPoolIndex value.

In one embodiment, when there exists only one PUSCH associated with the target coresetPoolIndex value among the multiple PUSCHs, the only one PUSCH associated with the target coresetPoolIndex value among the multiple PUSCHs is the earliest PUSCH associated with the target coresetPoolIndex value among the multiple PUSCHs.

In one embodiment, there exists an earliest PUSCH in the multiple PUSCHs and the first UCI is multiplexed onto the earliest PUSCH in the multiple PUSCHs.

In one embodiment, there exists an earliest PUSCH in the multiple PUSCHs and the first UCI is only multiplexed onto the earliest PUSCH in the multiple PUSCHs.

In one embodiment, there does not exist an earliest PUSCH in the multiple PUSCHs and the first UCI is not multiplexed onto any of the multiple PUSCHs.

In one embodiment, there does not exist an earliest PUSCH in the multiple PUSCHs and the first UCI is multiplexed onto more than one PUSCH among the multiple PUSCHs.

In one embodiment, there does not exist an earliest PUSCH in the multiple PUSCHs and the first UCI is multiplexed onto each PUSCH among the multiple PUSCHs.

In one embodiment, there does not exist an earliest PUSCH in the multiple PUSCHs and the first UCI is multiplexed on a PUSCH associated with a target coresetPoolIndex value in the multiple PUSCHs, and the target coresetPoolIndex value is default.

In one embodiment, there does not exist an earliest PUSCH in the multiple PUSCHs and the first UCI is multiplexed on a PUSCH associated with a target coresetPoolIndex value in the multiple PUSCHs, and the target coresetPoolIndex value is configurable.

In one embodiment, there does not exist an earliest PUSCH in the multiple PUSCHs and the first UCI is multiplexed onto an earliest PUSCH associated with a target coresetPoolIndex value in the multiple PUSCHs, and the first PUCCH is associated with the target coresetPoolIndex value.

In one embodiment, there does not exist an earliest PUSCH in the multiple PUSCHs and the first UCI is dropped to be transmitted.

### Embodiment 8

Embodiment 8 illustrates a schematic diagram of a multiplexing relation between a first UCI and multiple PUSCHs according to one embodiment of the present application, as shown in FIG. 8.

In embodiment 8, the first UCI is multiplexed onto an earliest PUSCH associated with a target coresetPoolIndex value among the multiple PUSCHs.

In one embodiment, when there exists only one PUSCH associated with the target coresetPoolIndex value among the multiple PUSCHs, the only one PUSCH associated with the target coresetPoolIndex value among the multiple PUSCHs is the earliest PUSCH associated with the target coresetPoolIndex value among the multiple PUSCHs.

In one embodiment, there exists more than one PUSCH associated with the target coresetPoolIndex value among the multiple PUSCHs.

In one embodiment, there exists more than one PUSCH associated with the target coresetPoolIndex value in the multiple PUSCHs, and any two PUSCHs associated with the target coresetPoolIndex value in the multiple PUSCHs are not overlapping in time domain.

In one embodiment, the target coresetPoolIndex value is default.

In one embodiment, the target coresetPoolIndex value is configurable.

In one embodiment, the target coresetPoolIndex value is 0.

In one embodiment, the target coresetPoolIndex value is 1.

In one embodiment, the target coresetPoolIndex value is fixed at 0.

In one embodiment, the target coresetPoolIndex value is fixed at 1.

In one embodiment, the target coresetPoolIndex value is configured by an RRC signaling.

In one embodiment, the target coresetPoolIndex value is configured by a MAC CE.

In one embodiment, the first PUCCH is associated with the target coresetPoolIndex value.

### Embodiment 9

Embodiment 9 illustrates a schematic diagram of a relation between a first PUCCH and a target coresetPoolIndex value according to one embodiment of the present application, as shown in FIG. 9.

In embodiment 9, the first PUCCH is associated with the target coresetPoolIndex value.

In one embodiment, the first PUCCH (Physical Uplink Control Channel) is triggered by DCI.

In one embodiment, the first PUCCH is trigger by a DCI format.

In one embodiment, when a DCI indicates PUCCH resources occupied by the first PUCCH, the DCI is a DCI that triggers the first PUCCH.

In one embodiment, when a DCI indicates transmitting the first PUCCH, the DCI is a DCI that triggers the first PUCCH.

In one embodiment, the first PUCCH is trigger by a DCI format.

In one embodiment, when a DCI format indicates PUCCH resources occupied by the first PUCCH, the DCI is a DCI that triggers the first PUCCH.

In one embodiment, when a DCI format indicates transmitting the first PUCCH, the DCI is a DCI that triggers the first PUCCH.

In one embodiment, the target coresetPoolIndex value is configured to the first PUCCH.

In one embodiment, the target coresetPoolIndex value is configured by an RRC signaling to the first PUCCH.

In one embodiment, the target coresetPoolIndex value is configured by a MAC CE to the first PUCCH.

In one embodiment, a DCI triggers the first PUCCH is associated with a target coresetPoolIndex value.

In one embodiment, a DCI format triggers the first PUCCH is associated with a target coresetPoolIndex value.

In one embodiment, the target coresetPoolIndex value is: a value of coresetPoolIndex configured for a CORESET used to receive a DCI triggering the first PUCCH.

In one embodiment, the target coresetPoolIndex value is: a value of coresetPoolIndex in a ControlResourceSet configured to search for a DCI triggering the first PUCCH.

In one embodiment, the target coresetPoolIndex value is: a coresetPoolIndex value for a CORESET to which a DCI triggering the first PUCCH is associated.

In one embodiment, the target coresetPoolIndex value is: a value of coresetPoolIndex configured in a ControlResourceSet to which a PDCCH used to receive a DCI triggering the first PUCCH is associated.

In one embodiment, the target coresetPoolIndex value is: a value of coresetPoolIndex configured for a CORESET used to receive a DCI format triggering the first PUCCH.

In one embodiment, the target coresetPoolIndex value is: a value of coresetPoolIndex in an IE ControlResourceSet configured to search a DCI format triggering the first PUCCH.

In one embodiment, the target coresetPoolIndex value is: a coresetPoolIndex value of a CORESET to which a DCI format triggering the first PUCCH is associated.

In one embodiment, the target coresetPoolIndex value is: a value of coresetPoolIndex configured in an IE ControlResourceSet to which a PDCCH used to receive a DCI format triggering the first PUCCH is associated.

### Embodiment 10

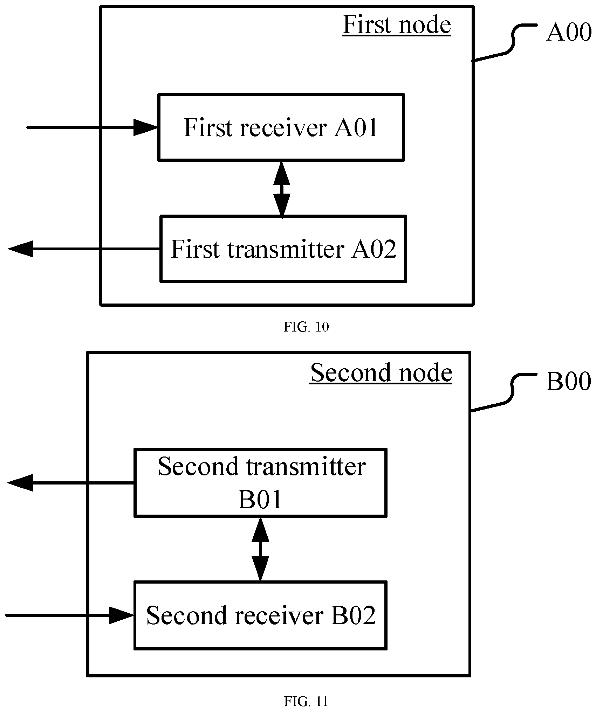

Embodiment 10 illustrates a structural block diagram of a processor in a first node, as shown in FIG. 10. In FIG. 10, a processor A00 in a first node comprises a first receiver A01 and a first transmitter A02.

In one embodiment, the first node A00 is a base station.

In one embodiment, the first node A00 is a UE.

In one embodiment, the first node A00 is a relay node.

In one embodiment, the first node A00 is a vehicle-mounted communication device.

In one embodiment, the first node A00 is a UE with a single panel.

In one embodiment, the first node A00 is a UE with multiple panels.

In one embodiment, the first receiver A01 comprises at least one of the antenna 452, the receiver 454, the multi-antenna receiving processor 458, the receiving processor 456, the controller/ processor 459, the memory 460 or the data source 467 in FIG. 4 of the present application.

In one embodiment, the first receiver A01 comprises at least the first five of the antenna 452, the receiver 454, the multi-antenna receiving processor 458, the receiving processor 456, the controller/ processor 459, the memory 460 and the data source 467 in FIG. 4 of the present application.

In one embodiment, the first receiver A01 comprises at least the first four of the antenna 452, the receiver 454, the multi-antenna receiving processor 458, the receiving processor 456, the controller/ processor 459, the memory 460 and the data source 467 in FIG. 4 of the present application.

In one embodiment, the first receiver A01 comprises at least the first three of the antenna 452, the receiver 454, the multi-antenna receiving processor 458, the receiving processor 456, the controller/ processor 459, the memory 460 and the data source 467 in FIG. 4 of the present application.

In one embodiment, the first receiver A01 comprises at least the first two of the antenna 452, the receiver 454, the multi-antenna receiving processor 458, the receiving processor 456, the controller/ processor 459, the memory 460 and the data source 467 in FIG. 4 of the present application.

In one embodiment, the first transmitter A02 comprises at least one of the antenna 452, the transmitter 454, the multi-antenna transmitting processor 457, the transmitting processor 468, the controller/ processor 459, the memory 460, or the data source 467 in FIG. 4 of the present application.

In one embodiment, the first transmitter A02 comprises at least first five of the antenna 452, the transmitter 454, the multi-antenna transmitting processor 457, the transmitting processor 468, the controller/ processor 459, the memory 460, and the data source 467 in FIG. 4 of the present application.

In one embodiment, the first transmitter A02 comprises at least first four of the antenna 452, the transmitter 454, the multi-antenna transmitting processor 457, the transmitting processor 468, the controller/ processor 459, the memory 460, and the data source 467 in FIG. 4 of the present application.

In one embodiment, the first transmitter A02 comprises at least first three of the antenna 452, the transmitter 454, the multi-antenna transmitting processor 457, the transmitting processor 468, the controller/ processor 459, the memory 460, and the data source 467 in FIG. 4 of the present application.

In one embodiment, the first transmitter A02 comprises at least first two of the antenna 452, the transmitter 454, the multi-antenna transmitting processor 457, the transmitting processor 468, the controller/ processor 459, the memory 460, and the data source 467 in FIG. 4 of the present application.

In one embodiment, the first receiver A01 receives multiple signalings; the first transmitter A02 transmits multiple PUSCHs, the multiple PUSCHs are on a same serving cell, the multiple PUSCHs respectively depend on the multiple signalings, there exist PUSCHs associated with different coresetPoolIndex values among the multiple PUSCHs; herein, a first PUCCH overlaps with the multiple PUSCHs, and a first UCI is associated with the first PUCCH; a multiplexing relation between the first UCI and the multiple PUSCHs is related to a distribution of the multiple PUSCHs.

In one embodiment, the multiplexing relation between the first UCI and the multiple PUSCHs is related to whether there exists an earliest PUSCH in the multiple PUSCHs; when there exists an earliest PUSCH in the multiple PUSCHs, the first UCI is multiplexed on the earliest PUSCH in the multiple PUSCHs.

In one embodiment, when there does not exist an earliest PUSCH in the multiple PUSCHs, the first UCI is not multiplexed onto any of the multiple PUSCHs.

In one embodiment, when there does not exist an earliest PUSCH in the multiple PUSCHs, the first UCI is multiplexed onto each PUSCH among the multiple PUSCHs.

In one embodiment, when there does not exist an earliest PUSCH in the multiple PUSCHs, the first UCI is multiplexed on a PUSCH associated with a target coresetPoolIndex value in the multiple PUSCHs, and the target coresetPoolIndex value is default.

In one embodiment, when there does not exist an earliest PUSCH in the multiple PUSCHs, the first UCI is multiplexed on a PUSCH associated with a target coresetPoolIndex value in the multiple PUSCHs, and the target coresetPoolIndex value is configurable.

In one embodiment, when there does not exist an earliest PUSCH in the multiple PUSCHs, the first UCI is multiplexed on a PUSCH associated with a target coresetPoolIndex value in the multiple PUSCHs, and the first PUCCH is associated with a target coresetPoolIndex value.

In one embodiment, the first UCI is multiplexed onto an earliest PUSCH associated with a target coresetPoolIndex value in the multiple PUSCHs, and the target coresetPoolIndex value is default.

In one embodiment, the first UCI is multiplexed onto an earliest PUSCH associated with a target coresetPoolIndex value in the multiple PUSCHs, and the target coresetPoolIndex value is configurable.

In one embodiment, the first UCI is multiplexed onto an earliest PUSCH associated with a target coresetPoolIndex value in the multiple PUSCHs, and the first PUCCH is associated with the target coresetPoolIndex value.

In one embodiment, the first receiver A01 receives multiple signalings, and each of the multiple signalings is a DCI format; the first transmitter A02 transmits multiple PUSCHs, the multiple PUSCHs are on a same serving cell, the multiple PUSCHs respectively depend on the multiple signalings, there exist PUSCHs associated with different coresetPoolIndex values among the multiple PUSCHs; herein, a first PUCCH overlaps with the multiple PUSCHs, and a first UCI is associated with the first PUCCH; there exists more than one PUSCH associated with a target coresetPoolIndex value among the multiple PUSCHs, and the first UCI is multiplexed onto an earliest PUSCH associated with the target coresetPoolIndex value among the multiple PUSCHs.

In one subembodiment of above embodiment, the first UCI is a CSI; the target coresetPoolIndex value is default.

In one subembodiment of the above embodiment, the target coresetPoolIndex value is configurable.

In one subembodiment of the above embodiment, the first UCI comprises HARQ-ACK information; the first PUCCH is associated with the target coresetPoolIndex value.

In one subembodiment of the above embodiment, the first UCI comprises HARQ-ACK information; the target coresetPoolIndex value is default.

In one embodiment, the first receiver A01 receives multiple signalings, and each of the multiple signalings is a DCI format; the first transmitter A02 transmits multiple PUSCHs, the multiple PUSCHs are on a same serving cell, the multiple PUSCHs respectively depend on the multiple signalings, there exist PUSCHs associated with different coresetPoolIndex values among the multiple PUSCHs; herein, a first PUCCH overlaps with the multiple PUSCHs, and a first UCI is associated with the first PUCCH; which PUSCH of the multiple PUSCHs the first UCI is multiplexed onto is related to whether there exists an earliest PUSCH in the multiple PUSCHs; when there exists an earliest PUSCH in the multiple PUSCHs, the first UCI is multiplexed on the earliest PUSCH in the multiple PUSCHs; when there does not exist an earliest PUSCH in the multiple PUSCHs, the first UCI is multiplexed on a PUSCH associated with a target coresetPoolIndex value in the multiple PUSCHs.

In one subembodiment of above embodiment, the first UCI is a CSI; the target coresetPoolIndex value is default.

In one subembodiment of the above embodiment, the target coresetPoolIndex value is configurable.

In one subembodiment of the above embodiment, the first UCI comprises HARQ-ACK information; the first PUCCH is associated with the target coresetPoolIndex value.

In one subembodiment of the above embodiment, the first UCI comprises HARQ-ACK information; the target coresetPoolIndex value is default.

In one embodiment, the first receiver A01 receives multiple signalings, and each of the multiple signalings is a DCI format; the first transmitter A02 transmits multiple PUSCHs, the multiple PUSCHs are on a same serving cell, the multiple PUSCHs respectively depend on the multiple signalings, there exist PUSCHs associated with different coresetPoolIndex values among the multiple PUSCHs; herein, a first PUCCH overlaps with the multiple PUSCHs, and a first UCI is associated with the first PUCCH; which PUSCH(s) of the multiple PUSCHs the first UCI is multiplexed onto is related to whether there exists an earliest PUSCH in the multiple PUSCHs; when there exists an earliest PUSCH in the multiple PUSCHs, the first UCI is multiplexed on the earliest PUSCH in the multiple PUSCHs; when there does not exist an earliest PUSCH in the multiple PUSCHs, the first UCI is multiplexed onto each PUSCH among the multiple PUSCHs.

In one embodiment, the first receiver A01 receives multiple signalings, and each of the multiple signalings is a DCI format; the first transmitter A02 transmits multiple PUSCHs, the multiple PUSCHs are on a same serving cell, the multiple PUSCHs respectively depend on the multiple signalings, there exist PUSCHs associated with different coresetPoolIndex values among the multiple PUSCHs; herein, a first PUCCH overlaps with the multiple PUSCHs, and a first UCI is associated with the first PUCCH; whether the first UCI is multiplexed onto one of the multiple PUSCHs is related to whether there exists an earliest PUSCH in the multiple PUSCHs; when there exists an earliest PUSCH in the multiple PUSCHs, the first UCI is multiplexed on the earliest PUSCH in the multiple PUSCHs; when there does not exist an earliest PUSCH in the multiple PUSCHs, the first UCI is not multiplexed onto any of the multiple PUSCHs.

### Embodiment 11

Embodiment 11 illustrates a structure block diagram of a processor in a second node, as shown in FIG. 11. In FIG. 11, a processor B00 in a second node comprises a second transmitter B01 and a second receiver B02.

In one embodiment, the second node B00 is a UE.

In one embodiment, the second node B00 is a base station.

In one embodiment, the second node B00 is satellite.

In one embodiment, the second node B00 is a relay node.

In one embodiment, the second node B00 is a vehicle-mounted communication device.

In one embodiment, the second node B00 is one of testing devices, testing equipment, and testing instruments.

In one embodiment, the second transmitter B01 comprises at least one of the antenna 420, the transmitter 418, the multi-antenna transmitting processor 471, the transmitting processor 416, the controller/ processor 475 or the memory 476 in FIG. 4 of the present application.

In one embodiment, the second transmitter B01 comprises at least the first five of the antenna 420, the transmitter 418, the multi-antenna transmitting processor 471, the transmitting processor 416, the controller/ processor 475 and the memory 476 in FIG. 4 of the present application.

In one embodiment, the second transmitter B01 comprises at least the first four of the antenna 420, the transmitter 418, the multi-antenna transmitting processor 471, the transmitting processor 416, the controller/ processor 475 and the memory 476 in FIG. 4 of the present application.

In one embodiment, the second transmitter B01 comprises at least the first three of the antenna 420, the transmitter 418, the multi-antenna transmitting processor 471, the transmitting processor 416, the controller/ processor 475 and the memory 476 in FIG. 4 of the present application.

In one embodiment, the second transmitter B01 comprises at least the first two of the antenna 420, the transmitter 418, the multi-antenna transmitting processor 471, the transmitting processor 416, the controller/ processor 475 and the memory 476 in FIG. 4 of the present application.

In one embodiment, the second receiver B02 comprises at least one of the antenna 420, the receiver 418, the multi-antenna receiving processor 472, the receiving processor 470, the controller/ processor 475 or the memory 476 in FIG. 4 of the present application.

In one embodiment, the second receiver B02 comprises at least first five of the antenna 420, the receiver 418, the multi-antenna receiving processor 472, the receiving processor 470, the controller/ processor 475 and the memory 476 in FIG. 4 of the present application.

In one embodiment, the second receiver B02 comprises at least first four of the antenna 420, the receiver 418, the multi-antenna receiving processor 472, the receiving processor 470, the controller/ processor 475 and the memory 476 in FIG. 4 of the present application.

In one embodiment, the second receiver B02 comprises at least first three of the antenna 420, the receiver 418, the multi-antenna receiving processor 472, the receiving processor 470, the controller/ processor 475 and the memory 476 in FIG. 4 of the present application.

In one embodiment, the second receiver B02 comprises at least first two of the antenna 420, the receiver 418, the multi-antenna receiving processor 472, the receiving processor 470, the controller/ processor 475 and the memory 476 in FIG. 4 of the present application.

In one embodiment, the second transmitter B01 transmits multiple signalings; the second receiver B02 receives multiple PUSCHs, the multiple PUSCHs are on a same serving cell, the multiple PUSCHs respectively depend on the multiple signalings, there exist PUSCHs associated with different coresetPoolIndex values among the multiple PUSCHs; herein, a first PUCCH overlaps with the multiple PUSCHs, and a first UCI is associated with the first PUCCH; a multiplexing relation between the first UCI and the multiple PUSCHs is related to a distribution of the multiple PUSCHs.

In one embodiment, the multiplexing relation between the first UCI and the multiple PUSCHs is related to whether there exists an earliest PUSCH in the multiple PUSCHs; when there exists an earliest PUSCH in the multiple PUSCHs, the first UCI is multiplexed on the earliest PUSCH in the multiple PUSCHs.

In one embodiment, when there does not exist an earliest PUSCH in the multiple PUSCHs, the first UCI is not multiplexed onto any of the multiple PUSCHs.

In one embodiment, when there does not exist an earliest PUSCH in the multiple PUSCHs, the first UCI is multiplexed onto each PUSCH among the multiple PUSCHs.

In one embodiment, when there does not exist an earliest PUSCH in the multiple PUSCHs, the first UCI is multiplexed on a PUSCH associated with a target coresetPoolIndex value in the multiple PUSCHs, and the target coresetPoolIndex value is default.

In one embodiment, when there does not exist an earliest PUSCH in the multiple PUSCHs, the first UCI is multiplexed on a PUSCH associated with a target coresetPoolIndex value in the multiple PUSCHs, and the target coresetPoolIndex value is configurable.

In one embodiment, when there does not exist an earliest PUSCH in the multiple PUSCHs, the first UCI is multiplexed on a PUSCH associated with a target coresetPoolIndex value in the multiple PUSCHs, and the first PUCCH is associated with a target coresetPoolIndex value.

In one embodiment, the first UCI is multiplexed onto an earliest PUSCH associated with a target coresetPoolIndex value in the multiple PUSCHs, and the target coresetPoolIndex value is default.

In one embodiment, the first UCI is multiplexed onto an earliest PUSCH associated with a target coresetPoolIndex value in the multiple PUSCHs, and the target coresetPoolIndex value is configurable.

In one embodiment, the first UCI is multiplexed onto an earliest PUSCH associated with a target coresetPoolIndex value in the multiple PUSCHs, and the first PUCCH is associated with the target coresetPoolIndex value.

The ordinary skill in the art may understand that all or part of steps in the above method may be implemented by instructing related hardware through a program. The program may be stored in a computer readable storage medium, for example Read-Only Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The first node in the present application includes but is not limited to mobile phones, tablet computers, notebooks, network cards, low-consumption equipment, enhanced MTC (eMTC) terminals, NB-IOT terminals, vehicle-mounted communication equipment, aircrafts, diminutive airplanes, unmanned aerial vehicles, telecontrolled aircrafts and other wireless communication devices. The second node in the present application includes but is not limited to mobile phones, tablet computers, notebooks, network cards, low-consumption equipment, enhanced MTC (eMTC) terminals, NB-IOT terminals, vehicle-mounted communication equipment, aircrafts, diminutive airplanes, unmanned aerial vehicles, telecontrolled aircrafts and other wireless communication devices. The UE or terminal in the present application includes but is not limited to mobile phones, tablet computers, notebooks, network cards, low-consumption equipment, enhanced MTC (eMTC) terminals, NB-IOT terminals, vehicle-mounted communication equipment, aircrafts, diminutive airplanes, unmanned aerial vehicles, telecontrolled aircrafts, etc. The base station or network side equipment in the present application includes but is not limited to macro-cellular base stations, micro-cellular base stations, home base stations, relay base station, eNB, gNB, Transmitter Receiver Point (TRP), GNSS, relay satellites, satellite base stations, space base stations, test device, test equipment, test instrument and other radio communication equipment.

It will be appreciated by those skilled in the art that this disclosure can be implemented in other designated forms without departing from the core features or fundamental characters thereof. The currently disclosed embodiments, in any case, are therefore to be regarded only in an illustrative, rather than a restrictive sense. The scope of invention shall be determined by the claims attached, rather than according to previous descriptions, and all changes made with equivalent meaning are intended to be included therein.

## Claims

1. A first node for wireless communications, comprising:
a first receiver, receiving multiple signalings; and
a first transmitter, transmitting multiple PUSCHs, the multiple PUSCHs being on a same serving cell, the multiple PUSCHs respectively depending on the multiple signalings, there existing PUSCHs associated with different coresetPoolIndex values among the multiple PUSCHs;
wherein a first PUCCH overlaps with the multiple PUSCHs, and a first UCI is associated with the first PUCCH; a multiplexing relation between the first UCI and the multiple PUSCHs is related to a distribution of the multiple PUSCHs;
the multiplexing relation between the first UCI and the multiple PUSCHs is related to whether there exists an earliest PUSCH in the multiple PUSCHs; when there exists an earliest PUSCH in the multiple PUSCHs, the first UCI is multiplexed on the earliest PUSCH in the multiple PUSCHs; when there does not exist an earliest PUSCH in the multiple PUSCHs, the first UCI is multiplexed on a PUSCH associated with a target coresetPoolIndex value in the multiple PUSCHs, and the target coresetPoolIndex value is default.

2. The first node according to claim 1, wherein the meaning of the expression that "the target coresetPoolIndex value is default" is: the target coresetPoolIndex value is 0.

3. The first node according to claim 1 or 2, wherein the multiple signalings are multiple DCIs; the meaning of the expression that "the multiple PUSCHs respectively depend on the multiple signalings" is: the multiple signalings are respectively used to schedule the multiple PUSCHs.

4. The first node according to any of claims 1-3, wherein the multiple PUSCHs only comprise two PUSCHs.

5. The first node according to any of claims 1-4, wherein the multiple PUSCHs only comprise two PUSCHs; when two of the multiple PUSCHs have a same starting time, neither of the two PUSCHs is an earliest PUSCH in the multiple PUSCHs.

6. The first node according to any of claims 1-5, wherein the multiple PUSCHs are all on a serving cell with a smallest ServCellIndex.

7. The first node according to any of claims 1-6, wherein the first UCI does not include HARQ-ACK information.

8. The first node according to any of claims 1-7, wherein the multiplexing relation between the first UCI and the multiple PUSCHs refers to: the first UCI is multiplexed on which of the multiple PUSCHs; the meaning of the expression of "a first UCI being associated with the first PUCCH" is: the first PUCCH carries the first UCI.

9. The first node according to any of claims 1-8, wherein a coresetPoolIndex value associated with one PUSCH among the multiple PUSCHs is: a coresetPoolIndex value of a CORESET used to receive a DCI for scheduling the PUSCH among the multiple PUSCHs.

10. The first node according to any of claims 1-9, wherein aperiodic CSI is not multiplexed in any of the multiple PUSCHs.

11. A second node for wireless communications, comprising:
a second transmitter, transmitting multiple signalings; and
a second receiver, receiving multiple PUSCHs, the multiple PUSCHs being on a same serving cell, the multiple PUSCHs respectively depending on the multiple signalings, there existing PUSCHs associated with different coresetPoolIndex values among the multiple PUSCHs;
wherein a first PUCCH overlaps with the multiple PUSCHs, and a first UCI is associated with the first PUCCH; a multiplexing relation between the first UCI and the multiple PUSCHs is related to a distribution of the multiple PUSCHs;
the multiplexing relation between the first UCI and the multiple PUSCHs is related to whether there exists an earliest PUSCH in the multiple PUSCHs; when there exists an earliest PUSCH in the multiple PUSCHs, the first UCI is multiplexed on the earliest PUSCH in the multiple PUSCHs; when there does not exist an earliest PUSCH in the multiple PUSCHs, the first UCI is multiplexed on a PUSCH associated with a target coresetPoolIndex value in the multiple PUSCHs, and the target coresetPoolIndex value is default.

12. The second node according to claim 11, wherein the meaning of the expression that "the target coresetPoolIndex value is default" is: the target coresetPoolIndex value is 0.

13. The second node according to claim 11 or 12, wherein the multiple signalings are multiple DCIs; the meaning of the expression that "the multiple PUSCHs respectively depend on the multiple signalings" is: the multiple signalings are respectively used to schedule the multiple PUSCHs.

14. The second node according to any of claims 11-13, wherein the multiple PUSCHs only comprise two PUSCHs.

15. The second node according to any of claims 11-14, wherein the multiple PUSCHs only comprise two PUSCHs; when two of the multiple PUSCHs have a same starting time, neither of the two PUSCHs is an earliest PUSCH in the multiple PUSCHs.

16. The second node according to any of claims 11-15, wherein the multiple PUSCHs are all on a serving cell with a smallest ServCellIndex.

17. The second node according to any of claims 11-16, wherein the first UCI does not inculde HARQ-ACK information.

18. The second node according to any of claims 11-17, wherein the multiplexing relation between the first UCI and the multiple PUSCHs refers to: the first UCI is multiplexed on which of the multiple PUSCHs; the meaning of the expression of "a first UCI being associated with the first PUCCH" is: the first PUCCH carries the first UCI.

19. The second node according to any of claims 11-18, wherein a coresetPoolIndex value associated with one PUSCH among the multiple PUSCHs is: a coresetPoolIndex value of a CORESET used to receive a DCI for scheduling the PUSCH among the multiple PUSCHs.

20. The second node according to any of claims 11-19, wherein aperiodic CSI is not multiplexed in any of the multiple PUSCHs.

21. A method in a first node for wireless communications, comprising:
receiving multiple signalings; and
transmitting multiple PUSCHs, the multiple PUSCHs being on a same serving cell, the multiple PUSCHs respectively depending on the multiple signalings, there existing PUSCHs associated with different coresetPoolIndex values among the multiple PUSCHs;
wherein a first PUCCH overlaps with the multiple PUSCHs, and a first UCI is associated with the first PUCCH; a multiplexing relation between the first UCI and the multiple PUSCHs is related to a distribution of the multiple PUSCHs;
the multiplexing relation between the first UCI and the multiple PUSCHs is related to whether there exists an earliest PUSCH in the multiple PUSCHs; when there exists an earliest PUSCH in the multiple PUSCHs, the first UCI is multiplexed on the earliest PUSCH in the multiple PUSCHs; when there does not exist an earliest PUSCH in the multiple PUSCHs, the first UCI is multiplexed on a PUSCH associated with a target coresetPoolIndex value in the multiple PUSCHs, and the target coresetPoolIndex value is default.

22. The method in a first node according to claim 21, wherein the meaning of the expression that "the target coresetPoolIndex value is default" is: the target coresetPoolIndex value is 0.

23. The method in a first node according to claim 21 or 22, wherein the multiple signalings are multiple DCIs; the meaning of the expression that "the multiple PUSCHs respectively depend on the multiple signalings" is: the multiple signalings are respectively used to schedule the multiple PUSCHs.

24. The method in a first node according to claims 21-23, wherein the multiple PUSCHs only comprise two PUSCHs.

25. The method in a first node according to claims 21-24, wherein the multiple PUSCHs only comprise two PUSCHs; when two of the multiple PUSCHs have a same starting time, neither of the two PUSCHs is an earliest PUSCH in the multiple PUSCHs.

26. The method in a first node according to any of claims 21-25, wherein the multiple PUSCHs are all on a serving cell with a smallest ServCellIndex.

27. The method in a first node according to any of claims 21-26, wherein the first UCI does not include HARQ-ACK information.

28. The method in a first node according to any of claims 21-27, wherein the multiplexing relation between the first UCI and the multiple PUSCHs refers to: the first UCI is multiplexed on which of the multiple PUSCHs; the meaning of the expression of "a first UCI being associated with the first PUCCH" is: the first PUCCH carries the first UCI.

29. The method in a first node according to any of claims 21-28, wherein a coresetPoolIndex value associated with one PUSCH among the multiple PUSCHs is: a coresetPoolIndex value of a CORESET used to receive a DCI for scheduling the PUSCH among the multiple PUSCHs.

30. The method in a first node according to any of claims 21-29, wherein aperiodic CSI is not multiplexed in any of the multiple PUSCHs.

31. A method in a second node for wireless communications, comprising:
transmitting multiple signalings; and
receiving multiple PUSCHs, the multiple PUSCHs being on a same serving cell, the multiple PUSCHs respectively depending on the multiple signalings, there existing PUSCHs associated with different coresetPoolIndex values among the multiple PUSCHs;
wherein a first PUCCH overlaps with the multiple PUSCHs, and a first UCI is associated with the first PUCCH; a multiplexing relation between the first UCI and the multiple PUSCHs is related to a distribution of the multiple PUSCHs;
the multiplexing relation between the first UCI and the multiple PUSCHs is related to whether there exists an earliest PUSCH in the multiple PUSCHs; when there exists an earliest PUSCH in the multiple PUSCHs, the first UCI is multiplexed on the earliest PUSCH in the multiple PUSCHs; when there does not exist an earliest PUSCH in the multiple PUSCHs, the first UCI is multiplexed on a PUSCH associated with a target coresetPoolIndex value in the multiple PUSCHs, and the target coresetPoolIndex value is default.

32. The method in a second node according to claim 31, wherein the meaning of the expression that "the target coresetPoolIndex value is default" is: the target coresetPoolIndex value is 0.

33. The method in a second node according to claim 31 or 32, wherein the multiple signalings are multiple DCIs; the meaning of the expression that "the multiple PUSCHs respectively depend on the multiple signalings" is: the multiple signalings are respectively used to schedule the multiple PUSCHs.

34. The method in a second node according to any of claims 31-33, wherein the multiple PUSCHs only comprise two PUSCHs.

35. The method in a second node according to any of claims 31-34, wherein the multiple PUSCHs only comprise two PUSCHs; when two of the multiple PUSCHs have a same starting time, neither of the two PUSCHs is an earliest PUSCH among the multiple PUSCHs.

36. The method in a second node according to any of claims 31-35, wherein the multiple PUSCHs are all on a serving cell with a smallest ServCellIndex.

37. The method in a second node according to any of claims 31-36, wherein the first UCI does not include HARQ-ACK information.

38. The method in a second node according to any of claims 31-37, wherein the multiplexing relation between the first UCI and the multiple PUSCHs refers to: the first UCI is multiplexed on which of the multiple PUSCHs; the meaning of the expression of "a first UCI being associated with the first PUCCH" is: the first PUCCH carries the first UCI.

39. The method in a second node according to any of claims 31-38, wherein a coresetPoolIndex value associated with one PUSCH among the multiple PUSCHs is: a coresetPoolIndex value of a CORESET used to receive a DCI for scheduling the PUSCH among the multiple PUSCHs.

40. The method in a second node according to any of claims 31-39, wherein aperiodic CSI is not multiplexed in any of the multiple PUSCHs.
